# EUROPÄISCHE PATENTSCHRIFT

(11) **EP 2 727 861 B1**
(45) Veröffentlichungstag und Bekanntmachung des Hinweises auf die Patenterteilung: **01.04.2015**
(21) Anmeldenummer: 13158921.0
(22) Anmeldetag: 13.03.2013
(51) Int. Cl.: B65G 23/22

(54) **Vorrichtung zum Anpassen der Position des Elektromotors an die Stellung der Antriebstrommel eines Direktantriebs für eine Gurtförderanlage**
Method for adjusting the position of the electric motor to the position of the drive drum of a direct drive for a belt conveyor assembly
Dispositif d'ajustement de la position du moteur électrique à la place du tambour d'entraînement d'un entraînement direct pour une installation de transport à courroie

(30) Priorität: 06.11.2012 DE 102012022147
(43) Veröffentlichungstag der Anmeldung: 07.05.2014
(73) Patentinhaber: Takraf GmbH, 04347 Leipzig (DE)
(72) Erfinder: Dr. Dilefeld, Mario, 04319 Leipzig (DE); Vollrath, Steffen, 04157 Leipzig (DE); Kahrger, Rainer, 04105 Leipzig (DE)
(74) Vertreter: Kailuweit & Uhlemann Patentanwälte Partnerschaft mbB

(56) Entgegenhaltungen:
- DE-A1- 1 805 101
- DE-A1- 2 823 673

## Beschreibung

Die Erfindung betrifft eine Vorrichtung zum Anpassen der Position des Elektromotors an die Stellung der Antriebstrommel eines Direktantriebs für eine Gurtförderanlage, bestehend aus einem separaten Tragrahmen zur Aufnahme des Elektromotors und zwischen diesem Tragrahmen und dem die Antriebstrommel aufnehmenden Traggerüst der Gurtförderanlage angeordneten Verbindungs- und Verstellelementen. Dabei wird unter einem Direktantrieb nach dem Entwurf der VDI-Richtlinie 3602 vom Januar 2001 ein solcher Antrieb verstanden, bei dem der Elektromotor direkt, ohne das Zwischenschalten eines Getriebes mit der Antriebstrommel verbunden ist.

Dieser Tragrahmen ist mit dem Antriebsgerüst so verbunden, dass die Lage des Elektromotors an die Stellung der Antriebstrommel angepasst werden kann, um bei der Kraftübertragung vom Elektromotor auf die Antriebstrommel günstige dynamische Verhältnisse zu erreichen. Eine solche Trennung von Traggerüst und Tragrahmen ist besonders für Gurtförderanlagen geeignet, die für hohe Leistungen ausgelegt und mit getriebelosen Antrieben ausgestattet sind. Dabei werden unter hohen Leistungen solche verstanden, die für einen Bedarf von etwa 2.500 kW und mehr ausgelegt sind. Dieser Tragrahmen für den Antrieb eines Gurtförderers mit seinen Ausrichtmöglichkeiten soll gleichermaßen sowohl für das erstmalige Ausrichten des Antriebs als auch später nach Veränderungen kinematischer Verhältnisse wie beispielsweise durch Schieflauf des Fördergurts oder nach Inspektionsarbeiten, wo die Stellung des Antriebs an die Lage der Antriebstrommel mit seiner Antriebswelle anzupassen ist, geeignet sein.

Gurtförderer werden bei ihrem Einsatz im Tagebau als Stetigförderer zum Transport von Massengütern wie beispielsweise Abraummaterial und mineralischen Rohstoffen verwendet. Dabei werden Gurtförderer mit längeren, sich über mehrere Kilometer erstreckenden und ansteigenden Förderwegen besonders hoch beansprucht.

Große Antriebsleistungen sind hier erforderlich. Übersteigt die Motorgröße einen Wert von etwa 2.500 kW, können als Alternative zum klassischen Antrieb auch getriebelose Antriebe zum Einsatz kommen. Hier wird der Antriebswellenzapfen mit dem Rotor des Antriebsmotors verbunden. Der Stator des Motors wird separat verlagert. Vorzugsweise dienen Fundamente zur Statorverlagerung.

Wenn die Welle der Antriebstrommel infolge der hohen Belastungen besonders stark verformt wird oder es erforderlich ist, die Lage der Antriebstrommel nach Revisionsarbeiten an dem Gurtförderer zu verändern, muss die Stellung des Antriebsmotors an die veränderte Lage der Welle der Antriebstrommel angepasst werden. Antriebe und Bauarten für Gurtförderer für Schüttgut sind in der VDI-Richtlinie 3602 (Entwurf) "Gurtförderer für Schüttgut; Antriebe und Bauarten", vom Januar 2001 beschrieben. Im Bild 10 wird als klassischer Antrieb von Gurtförderern eine Getriebe-Motorkombination gezeigt, die auf einem gemeinsamen Rahmen (Schwinge) verlagert ist. Diese Schwinge ist mit dem Rahmen des Gurtförderers verbunden. Da Getriebeantrieb und Trommelwelle starr miteinander verbunden sind, ist es erforderlich, Bewegungen des Antriebs, die aus den gurtzugsbedingten Verformungen der Trommelwelle im Betrieb des Förderers resultieren, durch eine elastische Verbindung zwischen Antriebsrahmen und umgebenden Stahlbau auszugleichen. Im Allgemeinen wird hierfür eine flexible Drehmomentenstütze verwendet.

Als Alternative zur Antriebsverlagerung auf einer Schwinge mit verdrehstarrer Verbindung zwischen Trommel und Antrieb und einer flexiblen Abstützung des gesamten Antriebs am Stahlbau ist auch eine starre Verlagerung von Trommel und Antrieb am Stahlbau oder auf Fundamenten möglich. Bei dieser Antriebskonfiguration übernimmt eine Kupplung, die einen geringen Wellenversatz ausgleichen kann, die Drehmomentübertragung.

Wenn es bei größeren Lageveränderungen erforderlich ist, die Stellung des Antriebs an eine veränderte Stellung der Welle der Antriebstrommel anzupassen, wird die Verbindung des Antriebs mit der Schwinge vorübergehend gelöst und durch die Verwendung von Zwischenlagen kann eine erforderliche Anpassung der Lage des Antriebs erreicht werden. Solche Anpassungen sind zeitaufwendig und mit zunehmender Größe des Antriebs immer schwieriger auszuführen.

Das Dokument DE 28 23 673 A offenbart eine Vorrichtung zum Anpassen der Position des Elektromotors an die Stellung der Antriebstrommel nach dem Oberbegriff des Ansprüchs 1.

Aus der Druckschrift DE 27 31 547 A1 ist eine Antriebsstation für Gurtförderer mit einer Schwingenverlagerung bekannt. Der Antrieb, bestehend aus einem Elektromotor und einem Getriebe, wird von einer Plattform aufgenommen, die in einer Schwenkachse gegenüber dem Tragrahmen des Gurtförderers beweglich angeordnet ist. Die Schwenkachse der Plattform und die Antriebswelle der Antriebstrommel sind zueinander parallel und in einem bestimmten Abstand angeordnet. Am Tragrahmen des Gurtförderers sind parallel zueinander beiderseits der Plattform zwei Lochplatten torsionssteif so befestigt, dass dazwischen die Plattform geschwenkt werden kann. Sie weisen Löcher auf, die in einem gemeinsamen Kreisbogen um die Schwenkachse angeordnet sind. Da die Schwenkachse der Plattform nicht mit der Längsachse der Antriebswelle der Antriebstrommel zusammen fällt, ändert sich beim Schwenken der Plattform die Lage der Antriebswelle des auf der Plattform montierten Getriebes relativ zur Lage der Antriebswelle der Antriebstrommel des Gurtförderers. In der Lage, bei der die Antriebswelle des Getriebes und die Achse der Antriebswelle der Antriebstrommel die größte Annäherung zueinander erreicht haben, wird die Plattform durch einen durch die betreffenden Löcher gesteckten Bolzen fixiert. Die Plattform liegt dann mit ihrem freien Ende auf diesem Bolzen. Da die Schwenkachse und die Antriebswelle einen Abstand zueinander aufweisen, muss in dieser Stellung zur Lagekorrektur noch eine Verschiebemöglichkeit des Elektromotors mit dem Getriebe auf der Plattform vorhanden sein. Dazu ist auf der Oberfläche der Plattform eine Serie von Löchern zur Befestigung des Antriebs nach dem stufenweisen Verschieben vorgesehen. Dadurch kann der Antrieb nach dem Verschieben in der Endlage verschraubt werden. Zum genaueren Anpassen können vorher noch zwischen der Plattform und den Füßen des aus dem Elektromotor und dem Getriebe bestehenden Antriebs unterschiedlich starke Beilagen geschoben werden.

Diese Ausführung der Verstellmöglichkeit der Lage des Antriebs zur Antriebstrommel eines Gurtförderers eignet sich insbesondere für Ausführungen kleiner und mittlerer Größe. Für die Verwendung von getriebelosen Antrieben ist die beschriebene Lösung ungeeignet.

Der Erfindung liegt die Aufgabe zu Grunde, eine solche technische Lösung für die Ausrichtbarkeit des Antriebs einer Gurtförderanlage mit getriebelosem Antrieb zu schaffen, die bei betriebs- oder wartungsbedingten Lageveränderungen von Antriebselementen zueinander die erforderlichen Ausrichtarbeiten zwischen Antriebstrommel und Antriebsmotor wesentlich vereinfacht und die auch eine spätere Nachjustage des Antriebsmototors zur Antriebstrommel ermöglicht.

Diese Aufgabe wird durch die Teilung des Antriebsgerüstes in ein Traggerüst zur gut fluchtenden stabilen Lagerung der Antriebstrommel und einen Tragrahmen zur Aufnahme des Elektromotors gelöst, wobei das Traggerüst für die Antriebstrommel das Grundgerüst ist und der Tragrahmen für den Elektromotor an diesem Grundgerüst angeschlossen und diesem gegenüber in seiner Lage verstellbar/anpassbar ist. Es werden die technischen Voraussetzungen für vier Verstellmöglichkeiten geschaffen. Diese vier Verstellmöglichkeiten sind:
- Verschieben des Traggerüsts für den Elektromotor gegenüber dem Traggerüst mit der Antriebstrommel parallel zur Antriebsachse.
- Verschieben des Traggerüsts für den Elektromotor gegenüber dem Traggerüst mit der Antriebstrommel parallel zur Fördererlängsachse.
- Verschieben des Traggerüsts für den Elektromotor gegenüber dem Traggerüst mit der Antriebstrommel senkrecht zur Antriebsachse.
- Schwenken des Traggerüsts für den Elektromotor gegenüber dem Traggerüst mit der Antriebstrommel um eine parallel zur Fördererlängsrichtung verlaufende Achse nach oben und unten.

Diese vier Verstellmöglichkeiten können auch in unterschiedlichen Varianten überlagert werden.

Diese Aufgabe für eine Vorrichtung zum Anpassen der Position des Elektromotors an die Stellung der Antriebstrommel wird durch die Kombination bekannter Merkmale nach dem Anspruch 1 gelöst und vorteilhafte Lösungen sind in den Unteransprüchen angegeben.

Zur Realisierung dieser vorstehend genannten Verstellmöglichkeiten werden zwischen dem Tragrahmen für den Elektromotor und dem Traggerüst mit der Antriebstrommel zwei Verbindungs- und Verstellelemente angebracht. Jedes dieser Verbindungs- und Verstellelemente besteht aus einer Keilbox, die mit dem Tragrahmen durch ein Gelenk und mit dem Traggerüst durch Gewindebolzen verbunden ist. Als Gelenk eignet sich besonders ein Kugelgelenk, dessen Stützkugel am Verbindungselement und dessen Kugelkalotte am Tragrahmen angeordnet ist. Mit diesen Kugelgelenken können bei dem Einsatz von zwei Verbindungs- und Verstellelementen besonders günstig Schrägstellungen des Tragrahmens kompensiert werden, die bei der Überlagerung unterschiedlicher Varianten der vorstehend genannten Verstellmöglichkeiten entstehen können. Die Stützkugel ist mit einem Fuß versehen, der eine ebene Grundfläche und einen viereckigen Rand aufweist. Am Fuß des Kugelgelenks schließt sich die Keilbox an.

Die Keilbox besteht aus einer rechteckigen Grundplatte, die einen ersten Rahmen aufnimmt. Innerhalb dieses Rahmens ist ein Keilpaket, bestehend aus einem mittels einer Stellschraube verschiebbaren Keil und einem nicht verschiebbaren Keil. Die schiefen Ebenen beider Keile sind aufeinander gleitend angeordnet. Die geraden, entgegengesetzt dazu ausgerichteten ebenen Flächen des einen Keils stützt sich an der Grundplatte und die gerade, dazu entgegengesetzt ausgerichtete ebene Fläche des anderen Keils stützt sich an der Grundfläche des Fußes der Stützkugel ab. Dadurch kann bei einem Verschieben des einen Keils der Abstand zwischen der Grundplatte und der Stützkugel verändert werden.

Am ersten Rahmen liegt ein zweiter Rahmen an, der vier in einem Viereck zueinander angeordnete Keilpakete aufnimmt. Jedes dieser Keilpakete besteht wiederum aus einem nicht verschiebbaren Keil, auf dem jeweils ein mit einer Stellschraube verschiebbarer Keil angeordnet ist. Die schiefen Ebenen eines jeden Keilpaketes oder auch Keilpaares sind ebenfalls aufeinander gleitend angeordnet. Die geraden, entgegengesetzt dazu ausgerichtete Flächen der einen Gruppe von Keilen stützen sich am Rahmen und die geraden, entgegengesetzt dazu ausgerichtete Flächen der anderen Gruppe von Keilen an den äußeren Flächen des Fußes der Stützkugel ab. Zum Verstellen der verschiebbaren Keile eines Keilpakets sind Stellschrauben vorgesehen. Damit diese Stellschrauben in der gewünschten Richtung auf die verschiebbaren Keile einwirken können, sind für jede Stellschraube am Rahmen gegenüberliegend zwei Gewindebohrungen vorgesehen, von denen immer eine der beiden zum Verstellen des jeweiligen Keils richtungsabhängig benutzt wird.

Zur Verbindung der Keilbox mit dem die Antriebstrommel aufnehmenden Traggerüst werden Gewindebolzen vorgesehen, die einerseits in das Traggerüst eingeschraubt werden, in ihrer Mitte die Keilbox mit der Grundplatte, den ersten und den zweiten Rahmen sowie den Fuß der Stützkugel aufnehmen, wo die Keilbox mit der Stützkugel durch Muttern am Traggerüst lösbar gehalten wird.

Zum Verstellen der Stützkugel in der Höhe oder seitlich wird dies durch ein Betätigen der jeweiligen Stellschraube und der Benutzung der jeweiligen Gewindebohrung erreicht. Damit die Stützkugel auch in die jeweilige Richtung ausweichen kann, muss zuvor ihre Verbindung zum Traggerüst gelockert werden. Danach wird der in Bewegungsrichtung befindliche verschiebbare Keil zurück geschoben und danach der andere, entgegengesetzt dazu angeordnete verschiebbare Keil nachgeführt. Nachdem der Verschiebeprozess vollzogen worden ist, können die Gewindebolzen festgezogen werden und der Tragrahmen ist wieder fest mit dem Traggerüst verbunden. Damit die Keilbox auch im gelockerten Zustand gehalten wird, ist der zweite Rahmen auf beiden Seiten mit der Stahlkonstruktion des Tragrahmens verbunden. Damit die Stützkugel mit ihrem Fuß eine Bewegung in die Längsrichtung der Trommelantriebswelle ausführen kann, ohne von den vier, den Stützkugelfuß umschließenden Keilpaketen behindert zu werden, ist beiderseits dieser Keilpakete ein ausreichendes Spiel vorgesehen.

Unter dem Tragrahmen sind eine oder mehrere höhenverstellbare Drehmomentenstützen angeordnet. Dadurch kann der Tragrahmen in seiner Neigung um seine Schwenkachse verstellt werden.

Weitere Einzelheiten der Erfindung sind Gegenstand der Unteransprüche.

Die Erfindung wird nachstehend an Hand eines Ausführungsbeispiels für einen in seiner Lage zur Lage der Antriebstrommel anpassbaren Tragrahmen für den Antrieb einer Gurtfördereranlage naher erläutert. Die dazugehörigen Zeichnungen zeigen:
Fig. 1 eine Antriebseinheit für eine Gurtfördereranlage mit der Antriebstrommel und dem Elektromotor in einer Seitenansicht,
Fig. 2 den auf dem verstellbaren Tragrahmen angeordneten Elektromotor in einer Seitenansicht,
Fig. 3 den verstellbaren Tragrahmen mit dem Elektromotor in einer Seitenansicht,
Fig. 4 den verstellbaren Tragrahmen mit den Verbindungselementen zum Antriebsgerüst für die Antriebstrommel in einer perspektivischen Darstellung,
Fig. 5 den verstellbaren Tragrahmen mit den Verbindungselementen in einer Seitenansicht,
Fig. 6 den verstellbaren Tragrahmen mit den Verbindungselementen in der Draufsicht,
Fig. 7 die Einzelheit X nach Fig. 5,
Fig. 8 die Einzelheit Y nach Fig. 6,
Fig. 9 den Schnitt A - A nach Fig. 7,
Fig. 10 den Schnitt B - B nach Fig. 7,
Fig. 11 den Schnitt C - C nach Fig. 7 und
Fig. 12 den Schnitt D - D nach Fig. 8.

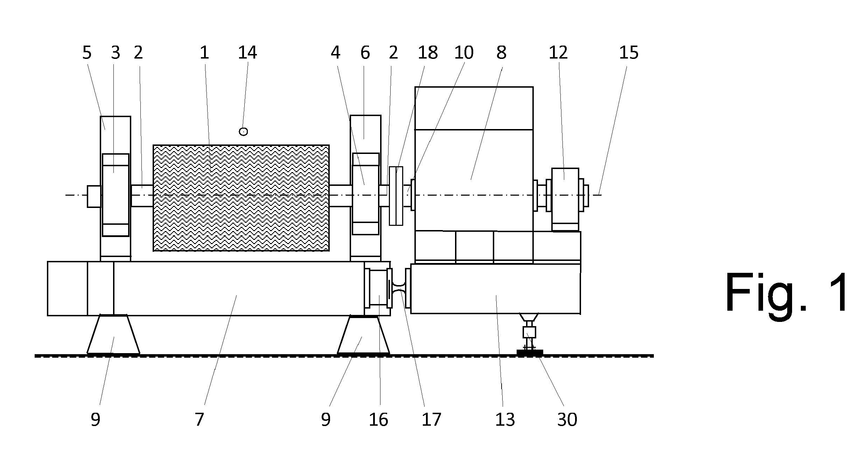

Die Zeichnung nach Fig. 1 dargestellte Antriebseinheit ist sehr robust ausgeführt, weil sie für eine Bandanlage eingesetzt wird, die hohen Belastungen ausgesetzt ist. Deshalb muss die gesamte Konstruktion des Förderers sehr robust ausgeführt werden.

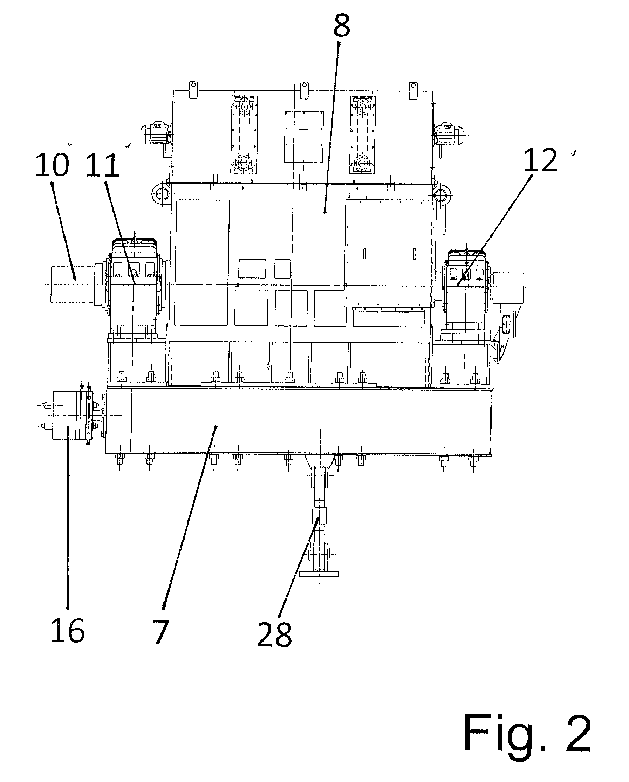

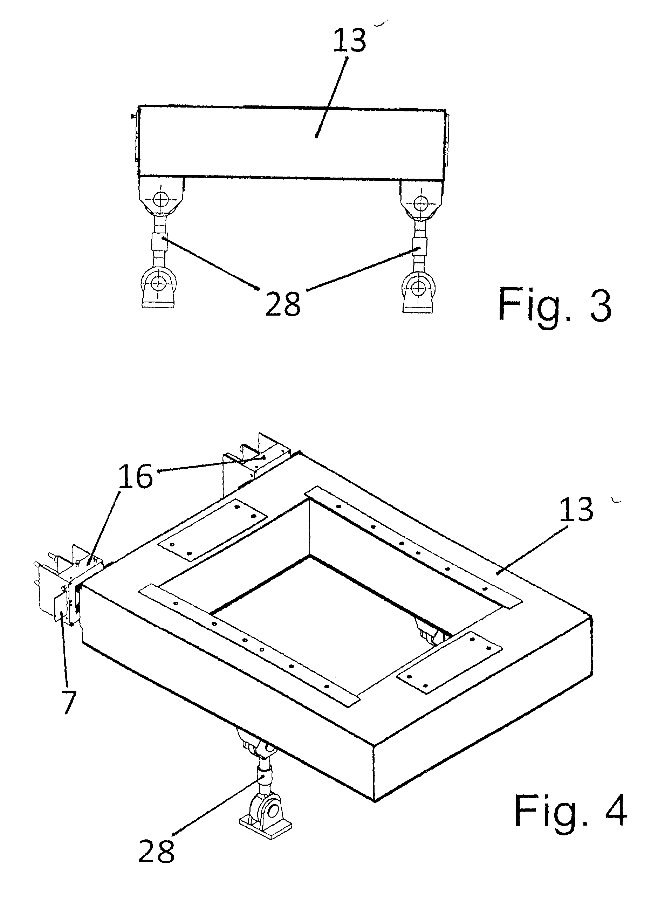

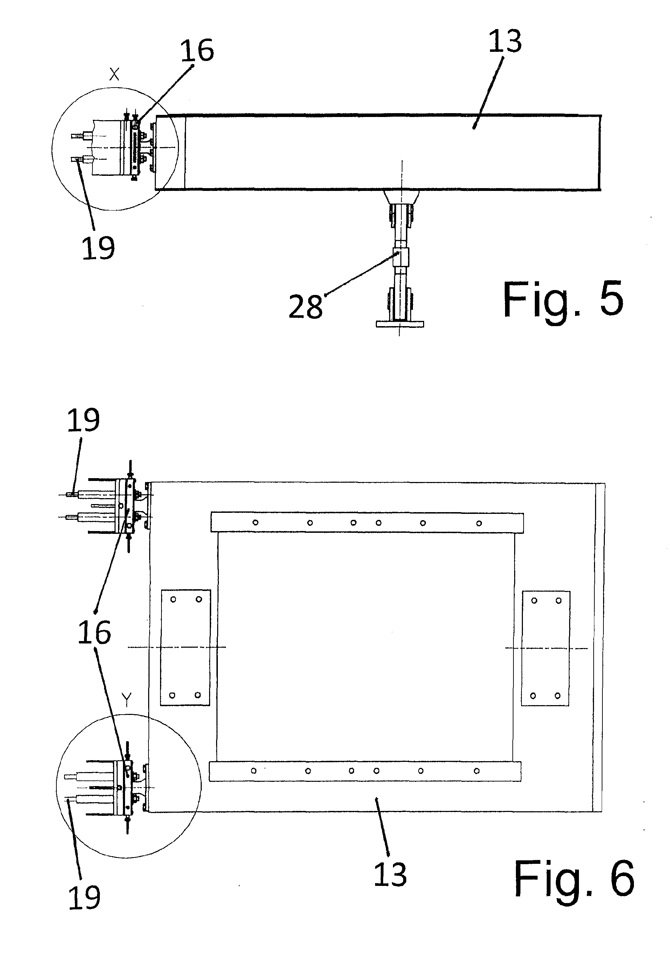

Der Antriebskopf des Gurtförderers besteht aus der Antriebstrommel 1 mit der beiderseits herausragender Trommelantriebswelle 2. Die Trommelantriebswelle 2 wird von den beiden Lagerböcken 3, 4 aufgenommen. Diese Lagerböcke 3, 4 sind über die Lagerbockaufnahmen 5, 6 mit dem auf dem Fundament 9 befestigten Antriebsgerüst 7 der Bandanlage verbunden. Durch die Lagerbockaufnahmen 5, 6 kann die Antriebstrommel 1 mit ihrer Trommelantriebswelle 2 verstellt, das heißt an die jeweiligen Betriebsbedingungen angepasst werden. Auf der einen Seite der Antriebstrommel 1 ist ein langsam laufender Elektromotor 8 angeordnet. Es ist auch möglich, einen zweiten solchen Elektromotor 8 auf der anderen Trommelseite anzuordnen. Der Elektromotor 8 ist entweder durch seine in Fig. 2 dargestellte Ausgangswelle 10 des Motors über eine Kupplung 18 mit der Trommelantriebswelle 2 verbunden oder die Trommelantriebswelle 2 ragt in den Rotor hinein, wo Trommelantriebswelle 2 und Motorausgangwelle 10 direkt miteinander verbunden sind. Diese starre Kopplung zwischen Rotor und Trommelantriebswelle 2 wird vorzugsweise für lagerlose Direktantriebe genutzt. Werden Direktantriebe mit eigenen Lagern verwendet, dient eine elastische Kupplung 18 (Fig. 1) der Drehmomentübertragung bei gleichzeitigem Winkelausgleich. Als dritte Möglichkeit der Motorlagerung von Direktantrieben wird das äußere Ende der direkt mit dem Rotor verbundenen Motorausgangswelle 10 als Lagerzapfen weitergeführt und von einem Stützlager 12 aufgenommen. Ein solches Stützlager 12 zeigen die Fig. 1 und 2. Im Unterschied zu Fig. 1 zeigt Fig. 2 noch ein zweites Stützlager 11 zur Aufnahme der Motorausgangswelle 10 auf der Seite der Antriebstrommel 1. Die Verbindung zwischen Trommelwelle 2 und Motorausgangswelle 10 erfolgt hier über eine Membrankupplung 18. Bei jeder von den beschrieben drei Varianten zur Motorverlagerung (lagerloser Motor; Motor mit zwei Lagern 12 nach Fig. 2; Motorverlagerung mit Membrankupplung 18 und Stützlager 12 nach Fig. 1) wird der Elektromotor 8 (mit oder ohne seine Lager 12) auf einem separaten Tragrahmen 13 befestigt. Ein solcher Tragrahmen 13 ist in den Zeichnungen nach Fig. 3 bis 6 in verschiedenen Ansichten detailliert dargestellt. Motorausgangswelle 10 und Trommelantriebswelle 2 befinden sich nach Fig. 1 in einer gemeinsamen Drehachse 15. Da der Rotor des langsam laufenden Elektromotors 8 einerseits mit der Trommelantriebswelle 2 verbunden ist, die sich auf dem Traggerüst 7 der Bandanlage abstützt und andererseits über den Lagerzapfen vom auf dem Tragrahmen 13 befestigten Stützlager 12 aufgenommen wird, verändert sich der Luftspalt zwischen dem Rotor und den Stator des Elektromotors 8 bei Relativbewegungen der Antriebstrommel 1 mit der Trommelantriebswelle 2 und des Elektromotors 8 zueinander. Eine solche Veränderung tritt bei Belastungen der Bandanlage durch das Fördergut auf. Sie kann aber auch auftreten, wenn sich die Lage der Antriebstrommel 1 durch Inspektionsarbeiten an der Bandanlage gegenüber dem Elektromotor 8 ändert. Das kann z. B. bei der Reparatur oder Erneuerung des Gurtbandes auftreten. Es kann aber auch ein Verstellen der Achse der Antriebstrommel 1 erforderlich sein, um einen Gurtschieflauf zu beheben. Damit in solchen Fällen der Lageabweichungen zwischen der Antriebstrommel 1 und dem Elektromototor 8 Zwängungen bzw. Änderungen des Luftspaltes im Elektromotor 8 vermieden werden, kann bei Motoren mit zwei Lagern 11, 12 nach Fig. 2 und bei Verwendung der Membranlösung eine entsprechend ausgebildete Kupplung eingesetzt werden, die die Relativbewegungen zueinander bis zu einer bestimmten Größe ausgleicht. Bei weitergehenden Lageveränderungen und bei lagerlosen Motoren 8 ist eine Veränderung der Lage des Antriebs erforderlich. Sie wird mit Hilfe der Erfindung dadurch erreicht, dass die Lage des in den Figuren 3 bis 6 als Einzelheit dargestellten Tragrahmens 13 mit dem Elektromotor 8 gegenüber dem Traggerüst 7 der Bandanlage in vier Ebenen verändert werden kann.
- Die erste Möglichkeit zum Verändern der Lage des Tragrahmens 13 gegenüber dem Traggerüst 7 besteht in einem Verschieben des Tragrahmens 13 entlang der Antriebsachse 15.
- Die zweite Möglichkeit zum Verändern der Lage des Tragrahmens 13 gegenüber dem Traggerüst 7 besteht in einem Verschieben des Tragrahmens 13 in Richtung der Fördererlängsachse 14.
- Die dritte Möglichkeit zum Verändern der Lage des Tragrahmens 13 gegenüber dem Traggerüst 7 besteht in einem Verschieben des Tragrahmens 13 in senkrechter Richtung zur Antriebsachse 15.
- Die vierte Möglichkeit zum Verändern der Lage des Tragrahmens 13 gegenüber dem Traggerüst 7 besteht im Schwenken des Tragrahmens 13 um eine parallel

zur Fördererlängsrichtung 14 verlaufende Gelenkachse nach oben und unten. Diese vier Verstellmöglichkeiten können auch in unterschiedlichen Varianten überlagert werden.

Damit diese vier Verstellmöglichkeiten und die Überlagerung dieser vier Verstellmöglichkeiten in verschiedenen Varianten zwischen dem Traggerüst 7 und dem Tragrahmen 13 konstruktiv realisiert werden können, sind zwischen beiden Stahlkonstruktionen 7, 13 zwei gleich ausgebildete, in einem Abstand zueinander angeordnete Verbindungs- und Verstellelemente 16 vorgesehen. Diese Verbindungs- und Verstellelemente 16 und ihr Anschluss an den Tragrahmen 13 sind in den nachfolgenden Zeichnungen Fig. 4 und folgende mit ihren Einzelheiten dargestellt.

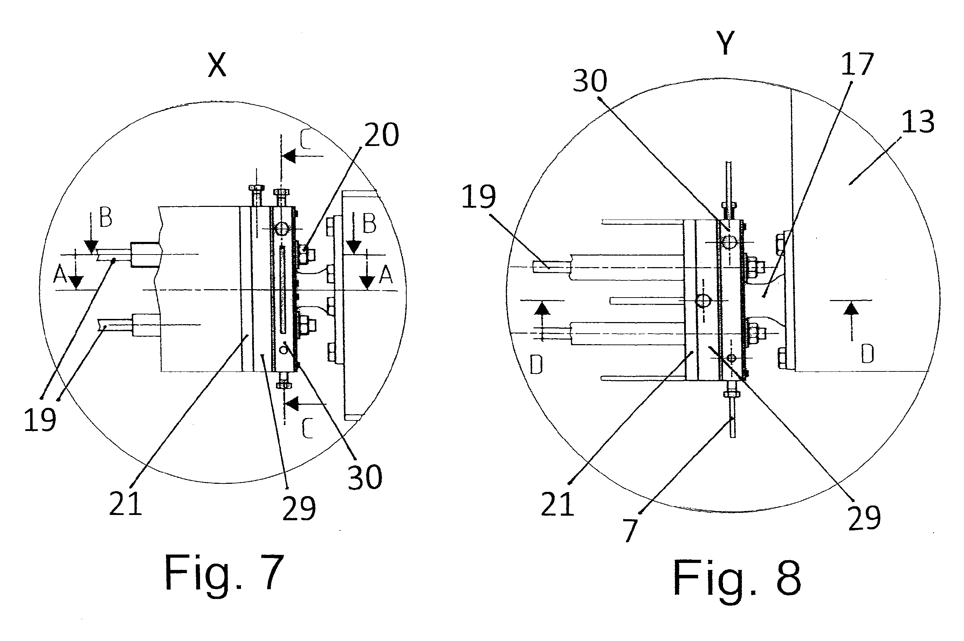

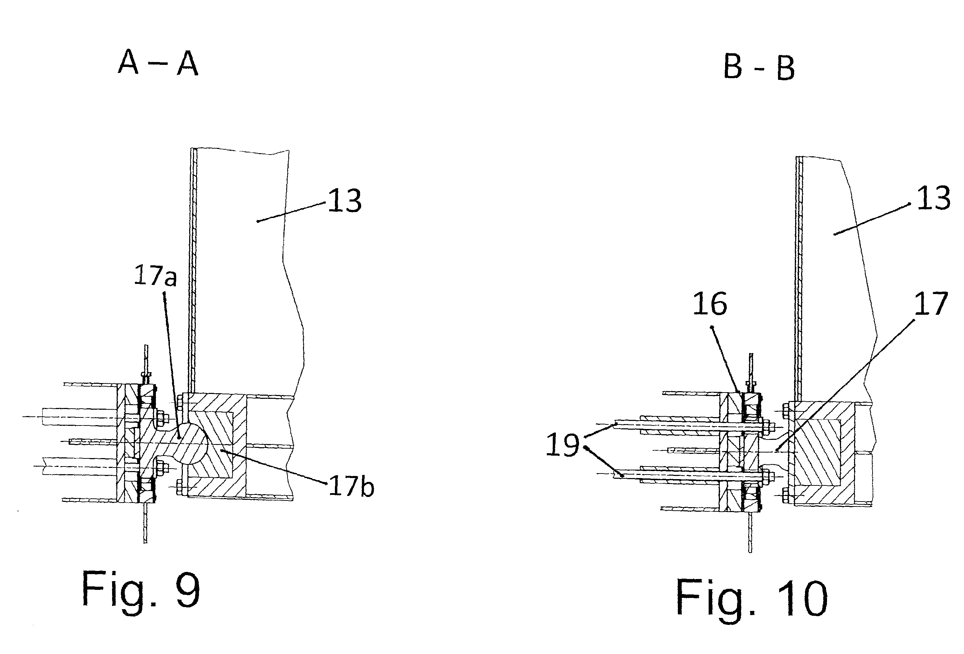

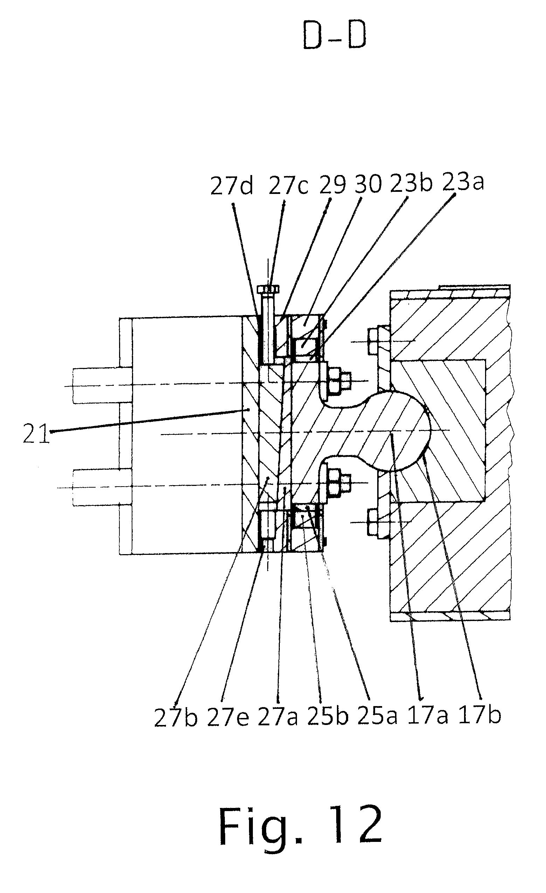

Jedes dieser Verbindungs- und Verstellelemente 16 ist auf der einen Seite nach den Fig. 9 und 12 gelenkig mit dem Tragrahmen 13 verbunden und auf der gegenüberliegenden Seite nach den Fig. 4 bis 12 mit Möglichkeiten zur Befestigung am Traggerüst 7 versehen. Diese Befestigungsmöglichkeiten werden an die spezifische konstruktive Ausführung des Traggerüsts 7 und der Verbindungselemente 16 angepasst. Ein Merkmal der Erfindung ist es jedoch, dass mit dieser Befestigungsmöglichkeit gleichzeitig die Einzelteile der Verbindungs- und Verstellelemente 16 als Pakete zusammen gehalten werden, diese Befestigungsmöglichkeit lösbar ist und während des Verstellvorgangs gelockert werden kann, so dass sich die Stützkugeln 17a während des Verstellens in die vorgesehene Richtung verschieben können. Im Ausführungsbeispiel werden dazu vier Gewindebolzen 19 vorgesehen, die auf der einen Seite in das Traggerüst 7 geschraubt und auf der anderen Seite durch Muttern 20 die Verbindungselemente 16 mit ihren Stützkugeln 17a an den Füßen halten.

Zur Herbeiführung der gelenkigen Verbindung 17 mit dem Traggerüst 7 wird das Verbindungselement 16 nach den Fig. 9, 10 und 12 mit einer Stützkugel 17a versehen, die von jeweils einer vom Traggerüst 7 aufgenommenen Kugelkalotte 17b aufgenommen wird. Durch den Fuß der Stützkugel 17a werden die vier Gewindebolzen 19 geführt, die, wie vorstehend beschrieben, einerseits mit dem Traggerüst 7 verschraubt sind und andererseits mit den Befestigungsmuttern 20 für die Stützkugel 17a in funktioneller Verbindung stehen. Damit die vier Gewindebolzen 19 im gelockerten Zustand der Muttern 20 den Bewegungsbereich der beiden Verbindungs- und Verstellelemente 16 zur Anpassung an die veränderte Position des Tragrahmens 13 nicht einschränken, werden für die Gewindebolzen 19 ausreichend große Durchgangsbohrungen bzw. Hülsen mit ausreichend großen Innendurchmessern vorgesehen. Dadurch kann der Tragrahmen 13 bei der vorgesehenen Verwendung von zwei Verbindungs- und Verstellelementen 16 gegenüber dem Traggerüst 7 mit der Antriebstrommel 1 um die parallel zur Fördererlängsachse 14 durch die Mitte der Stützkugeln 17a verlaufenden Achse nach oben und unten geschwenkt werden. Obwohl zur winkelbeweglichen Anordnung des Tragrahmens 13 an das Traggerüst 7 auch andere Gelenke verwendet werden können, wurde dem Kugelgelenk 17 auf Grund der hohen Belastbarkeit, der einfachen Montage und der vollen Funktionsfähigkeit bei der Einstellung unterschiedlicher Positionen des Tragrahmens 13 gegenüber dem Traggerüst 7 der Vorzug gegeben.

Das Verbindungs- und Verstellelement 16 besteht weiterhin noch aus einer Keilbox 22. Diese Keilbox 22 nimmt fünf Keilpakete 23 bis 27 auf, durch die der Tragrahmen 13 gegenüber dem Traggerüst 7 in drei Ebenen verstellt werden kann. Die Keilbox 22 besteht nach Fig. 12 aus einer rechteckigen Grundplatte 21, auf der ein erster Rahmen 29 anliegt. Grundplatte 21 und Rahmen 29 weisen die gleiche Außenkontur auf. Im Inneren des vom Rahmen 29 umschlossenen Bereiches befindet sich ein erstes Keilpaket 27. Ein solches Keilpaket 27 besteht aus einem zusammengehörigen Paar Keilen 27a und 27b, von denen der eine fest und der andere jeweils mittels einer Stellschraube 27c längs verschiebbar angeordnet ist. Die schiefen Ebenen beider Keile 27a und 27b sind aufeinander gleitend angeordnet. Mit der geraden, nach außen gerichtete Fläche des einen verschiebbaren Keils 27b stützt sich dieser ab und der andere Keil 27a verschiebt das mit ihm in funktioneller Verbindung stehende Bauteil. Der verschiebbare Keil 27b des ersten Keilpakets 27 wird oben und unten vom Rahmen 29 geführt und liegt mit seiner geraden, nach außen gerichteten Fläche an der Grundplatte 21 an. Mit seiner schiefen Ebene gleitet der bewegliche Keil 27b auf der schiefen Ebene des festen Keils 27a. Mit seiner geraden, nach außen gerichteten Fläche liegt dieser Keil 27a an der unteren Fläche des Fußes der Stützkugel 17a an. Dadurch wird bei einem Verstellen des bewegbaren Keils 27b mit der Stellschraube 27c der feste Keil 27a gegen die untere Fläche des Fußes der Stützkugel 17a gedrückt und die Stützkugel 17a mit der Kugelkalotte 17b verschiebt den Tragrahmen in diese Richtung. Vorstehend ist dies als erste Verschiebemöglichkeit entlang der Antriebsachse 15 genannt. Soll das Verschieben in die entgegengesetzte Richtung erfolgen, wird die Stellschraube 27c aus der Gewindebohrung 27d entfernt und in die gegenüberliegende Gewindebohrung 27e eingeschraubt. Dabei kann der bewegliche Keil 27b in die andere Richtung verstellt werden. Damit eine Verstellbewegung zwischen der Keilbox 22 und der Stützkugel 17a vollzogen werden kann, wird die durchgehende Verbindung von der Stützkugel 17a durch die Keilbox 22 bis zum Traggerüst 7 während der Verstellbewegung gelockert.

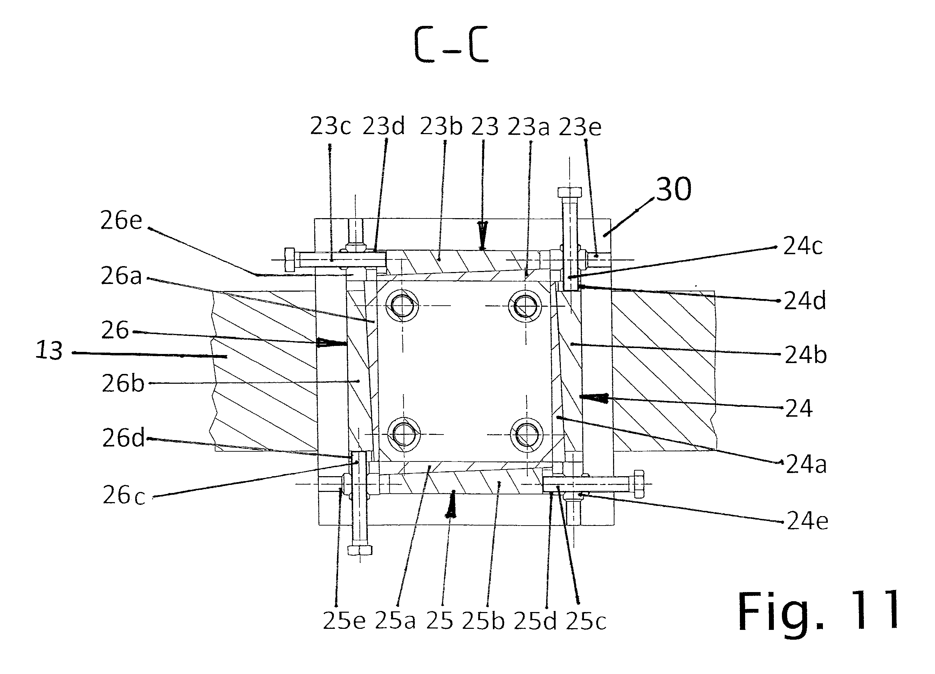

Neben dem ersten Rahmen 29 ist mit gleichen äußeren Abmessungen ein zweiter Rahmen 30 angeordnet. Er ist beiderseits nach Fig. 11 mit der Konstruktion des Traggerüsts 7 verbunden und nimmt in seinem Inneren vier weitere, in einem Viereck zueinander angeordnete Keilpakete 23, 24, 25, 26 auf. In der Innenseite des Rahmens 30 sind die verschiebbaren Keile 23b, 24b, 25b, 26b mit ihren geraden, nach außen gerichteten Flächen angeordnet. Innen befinden sich die nicht verschiebbaren Keile 23a, 24a, 25a, 26a der Keilpakete 23, 24, 25, 26. Die verschiebbaren und nicht verschiebbaren Keile 23a auf 23b, 24a auf 24b, 25a auf 25b, 26a auf 26b eines Keilpakets 23, 24, 25, 26 sind jeweils mit ihren schrägen Flächen aufeinander liegend und bei der Verstellbewegung aufeinander gleitend angeordnet. Mit ihren geraden, nach innen gerichteten Flächen liegt jeweils einer der nicht verschiebbaren Keile 23a, 24a, 25a, 26a an einer der vier Außenflächen des Fußes der Stützkugel 17a an. Wen nun die Stützkugel 17a nach oben oder unten oder seitlich verstellt werden soll, wird dies durch ein Betätigen der jeweiligen Stellschraube 23c, 24c, 25c oder 26c erreicht. Damit die Stützkugel 17a in die jeweilige Richtung ausweichen kann, muss zuerst ihre Verbindung zum Traggerüst 7 gelockert werden, danach wird der in Bewegungsrichtung befindliche verschiebbare Keil 23b, 24b, 25b oder 26b zurück geschoben und danach der verschiebbare Keil 23b, 24b, 25b oder 26b nachgeführt. Die Verschieberichtung wird durch die Betätigung der jeweiligen Stellschraube 23c, 24c, 25c oder 26c und die Benutzung der betreffenden Gewindebohrung 23d oder 23e, 24d oder 24e, 25d oder 25e, 26d oder 26e erreicht. Nach dem Verstellen wird die Schraubverbindung der Stützkugel 17a und dem Verbindungs- und Verstellelement 16 mit dem Traggerüst 7 wieder angezogen. Damit kann die vorstehend beschriebene zweite Möglichkeit zum Verschieben des Tragrahmens 13 in Richtung der Fördererlängsachse 14 und die dritte Möglichkeit zum Verschieben des Tragrahmens 13 in senkrechter Richtung zur Antriebsachse 15 realisiert werden.

Zum Abstützen des Tragrahmens 13 auf dessen freier Seite werden nach den Fig. 1 bis 5 zwei Drehmomentenstützen 28 pendelnd angeordnet. Sie sind durch Stellmuttern höhenverstellbar. Ihre Füße sind schwenkbar und können sich so an Unebenheiten des Untergrunds anpassen. Damit wird die vorstehend genannte vierte Möglichkeit zum Verstellen des Tragrahmens gegenüber dem Traggerüst 7 durch das Schwenken um eine parallel zur Fördererlängsrichtung 14 verlaufende Achse nach oben und unten realisiert.

Diese vier Verstellmöglichkeiten können bei Bedarf durch die Anwendung einzelner Varianten überlagert werden. Dafür muss ein ausreichender Bewegungsfreiraum der zueinander beweglichen Teile zum Verstellen des Tragrahmens 13 vorhanden sein. Eine wesentliche technische Voraussetzung für einen solchen Bewegungsfreiraum wird durch die vorgesehene Verwendung von Kugelgelenken 17 erreicht. Mit solchen Kugelgelenken 17 kann auch die Funktion bei unterschiedlich eingestellten Verbindungs- und Verstellelementen 16 gewährleistet werden, so dass der Tragrahmen 13 gegenüber dem Traggerüst 7 in seiner Lage auch in mehr als einer Ebene schräg eingestellt werden kann.

### Bezugszeichenliste

- 1: Antriebstrommel
- 2: Trommelantriebswelle
- 3: Lagerbock
- 4: Lagerbock
- 5: Lagerbockaufnahme
- 6: Lagerbockaufnahme
- 7: Traggerüst für die Antriebstrommel 1
- 8: Elektromotor
- 9: Fundament
- 10: Ausgangswelle
- 11: Stützlager
- 12: Stützlager
- 13: Tragrahmen für Elektromotor 8
- 14: Fördererlängsachse
- 15: Antriebsachse/ gemeinsamen Drehachse von Trommelantriebswelle und E-Motor
- 16: Verbindungs- und Verstellelement
- 17: Gelenk, Kugelgelenk, gelenkige Verbindung
- 17a: Stützkugel
- 17b: Kugelkalotte
- 18: Kupplung
- 19: Gewindebolzen
- 20: Muttern
- 21: Grundplatte
- 22: Keilbox
- 23: Keilpaket / Keilpaar
- 23a: nicht verschiebbarer Keil
- 23b: verschiebbarer Keil
- 23c: Stellschraube
- 23d: Gewindebohrung (mit Stellschraube)
- 23e: Gewindebohrung (ohne Stellschraube)
- 24: Keilpaket
- 24a: nicht verschiebbarer Keil
- 24b: verschiebbarer Keil
- 24c: Stellschraube
- 24d: Gewindebohrung (mit Stellschraube)
- 24e: Gewindebohrung (ohne Stellschraube)
- 25: Keilpaket
- 25a: nicht verschiebbarer Keil
- 25b: verschiebbarer Keil
- 25c: Stellschraube
- 25d: Gewindebohrung (mit Stellschraube)
- 25e: Gewindebohrung (ohne Stellschraube)
- 26: Keilpaket
- 26a: nicht verschiebbarer Keil
- 26b: verschiebbarer Keil
- 26c: Stellschraube
- 26d: Gewindebohrung (mit Stellschraube)
- 26e: Gewindebohrung (ohne Stellschraube)
- 27: Keilpaket
- 27a: nicht verschiebbarer Keil
- 27b: verschiebbarer Keil
- 27c: Stellschraube
- 27d: Gewindebohrung (mit Stellschraube)
- 27e: Gewindebohrung (ohne Stellschraube)
- 28: Drehmomentenstütze
- 29: erster Rahmen
- 30: zweiter Rahmen

## Patentansprüche

1. Vorrichtung zum Anpassen der Position des Elektromotors an die Stellung der Antriebstrommel eines Direktantriebs für eine Gurtförderanlage, bestehend aus einem Traggerüst (7) zur Aufnahme der Antriebstrommel (1) und einem gesonderten Tragrahmen (13) zur Aufnahme des Elektromotors (8), wobei die Position dieses Tragrahmens (13) gegenüber dem Traggerüst (7) der Gurtförderanlage veränderbar ist und der Elektromotor entweder direkt mit der Trommelantriebswelle (2) oder über eine Kupplung (18) bzw. Membrane verdrehstarr verbunden ist,
**dadurch gekennzeichnet,** dass
der, den Elektromotor (8) aufnehmende Tragrahmen (13) am Traggerüst (7) der Bandanlage mittels zweier gleichartig ausgebildeter Verbindungs- und Verstellelemente (16) angeschlossen ist,
jedes dieser Verbindungs- und Verstellelemente (16) mit der Stützkugel (17a) eines Kugelgelenkes (17) zur gelenkigen Verbindung mit dem Tragrahmen (13), einer Keilbox (22) und mit Befestigungsmitteln zur während der Verstellbewegung gelockerten Verbindung mit dem Traggerüst (7) ausgerüstet ist,
die Stützkugel (17a) des Kugelgelenkes (17) einen viereckigen Fuß mit einer ebenen Grundfläche aufweist,
die Keilbox (22) aus einer rechteckigen Grundplatte (21) besteht, diese Grundplatte (21) einen ersten Rahmen (29) aufnimmt, in dessen inneren, umschlossenen Bereich ein Keilpaket (27), bestehend aus einem nicht verschiebbaren Keil (27a) und einem mittels einer Stellschraube (27c) verschiebbaren Keil (27b), die schiefen Ebenen beider Keile (27a, 27b) aufeinander gleitend angeordnet sind, die gerade, entgegengesetzt dazu ausgerichtete Ebene des einen Keils (27a oder 27b) sich an der Grundplatte (21) abstützend und die gerade, entgegengesetzt dazu ausgerichtete Ebene des anderen Keils (27b oder 27a) sich an der Grundfläche des Fußes der Stützkugel (17a) abstützend angeordnet ist,
sich auf dem ersten Rahmen (29) ein zweiter Rahmen (30) befindet, der außen beiderseits mit der Tragkonstruktion verbunden ist und innen vier in einem Viereck zueinander angeordnete Keilpakete (23, 24, 25, 26), jeweils bestehend aus einem nicht verschiebbaren Keil (23a, 24a, 25a, 26a) und einem darauf mittels einer Stellschraube (23c, 24c, 25c, 26c) verschiebbaren Keil (23b, 24b, 25b, 26b) aufnimmt, wobei die schiefen Ebenen eines jeden Keilpaketes (23, 24, 25, 26) aufeinander gleitend angeordnet sind, die gerade, entgegengesetzt dazu ausgerichtete Ebene des einen Keils (23a oder 23b, 24a oder 24b, 25a oder 25b, 26a oder 26b) sich außen an den inneren Flächen des Rahmens (30) abstützend und die gerade, entgegengesetzt dazu ausgerichtete Ebene des anderen Keils (23b oder 23a, 24b oder 24a, 25b oder 25a, 26b oder 26a) sich an den äußeren Flächen des Fußes der Stützkugel (17a) abstützend angeordnet sind,
der Tragrahmen (13) für jede der Stützkugeln (17a) der beiden Kugelgelenke (17) eine Kugelkalotte (17b) aufnimmt,
jedes dieser beiden Verbindungs- und Verstellelemente (16) durch den zweiten Rahmen (30) beiderseits am Traggerüst (7) befestigt ist und
unter dem Tragrahmen (13) in einem Abstand zur Schwenkachse der Kugelgelenke (17) eine oder mehrere höhenverstellbare Drehmomentenstützen (28) angeordnet sind.

2. Vorrichtung zum Anpassen der Position des Elektromotors an die Stellung der Antriebstrommel eines Direktantriebs für eine Gurtförderanlage nach Anspruch 1,
**dadurch gekennzeichnet, dass** jeweils auf der der Bohrung (23d bis 27d) mit dem verschiebbaren Keilen (23b bis 27b) gegenüberliegenden Seite eine zweite Bohrung (23e bis 27e) zur Aufnahme der Stellschrauben (23c bis 27c) mit entgegengesetzter Wirkrichtung auf die verschiebbaren Keile (23b bis 27b) vorgesehen ist.

3. Vorrichtung zum Anpassen der Position des Elektromotors an die Stellung der Antriebstrommel eines Direktantriebs für eine Gurtförderanlage nach Anspruch 1,
**dadurch gekennzeichnet, dass** an Stelle eines Kugelgelenkes (17) zur gelenkigen Verbindung des Traggerüstes (7) mit dem Tragrahmen (13) ein anderes, um mindestens eine parallel zur Transportrichtung verlaufende Längsachse (14) schwenkbares Gelenk mit einem ausreichenden Spiel zum Ausgleich von Fluchtungsabweichungen beider Gelenke voneinander vorgesehen ist.

4. Vorrichtung zum Anpassen der Position des Elektromotors an die Stellung der Antriebstrommel eines Direktantriebs für eine Gurtförderanlage nach Anspruch 1,
**dadurch gekennzeichnet, dass** die lösbare Befestigung der beiden Verbindungselemente (16) mit dem Traggerüst (7) an die konstruktiven Einzelheiten des Traggerüstes (7) angepasst ist und zwischen den Verschraubungen und den Durchgangsbohrungen in Verbindungselementen (16) ein zur Verstellung ausreichendes Spiel vorgesehen ist.

## Claims

1. Device for adapting the position of the electric motor to the position of the driving drum of a direct drive for a belt conveyor, comprising a support structure (7) for receiving the driving drum (1) and a separate support frame (13) for receiving the electric motor (8), wherein the position of this support frame (13) in relation to the support structure (7) of the belt conveyor can be changed and the electric motor is connected torsionally rigidly either directly with the drum drive shaft (2) or via a coupling (18) or membrane
**characterized in that**
the support frame (13) receiving the electric motor (8) is connected to the support structure (7) of the conveyor belt unit by means of two identically designed connecting and adjusting elements (16),
each of these connecting and adjusting elements (16) is equipped with the support ball (17a) of a ball joint (17) for articulated connection with the support frame (13), with a wedge box (22) and with fastening means for loosened connection with the support structure (7) during the adjusting motion,
the support ball (17a) of the ball joint (17) has a quadrangular foot with a flat base,
the wedge box (22) comprises a rectangular base plate (21), said base plate (21) receiving a first frame (29), in the inner, enclosed area of which a wedge packet (27), comprising a non-displaceable wedge (27a) and a wedge (27b) displaceable by means of an adjusting screw (27c), with the oblique planes of both wedges (27a, 27b) being arranged such that they slide on one another, with the straight plane of one wedge (27a or 27b) directed opposite thereto being arranged in a supporting manner on the base plate (21) and the straight plane of the other wedge (27b or 27a), which plane is directed opposite thereto, being arranged in a supporting manner on the base of the foot of the support ball (17a),
a second frame (30), which is connected on the outside with the support construction on both sides and receives on the inside four wedge packets (23, 24, 25, 26), which are arranged in a rectangle in relation to one another, each comprising a non-displaceable wedge (23a, 24a, 25a, 26a) and a wedge (23b, 24b, 25b, 26b) displaceable thereon by means of an adjusting screw (23c, 24c, 25c, 26c), is located on the first frame (29), wherein the oblique planes of each wedge packet (23, 24, 25, 26) are arranged such that they slide on one another, the straight plane of one wedge (23a or 23b, 24a or 24b, 25a or 25b, 26a or 26b), which is directed opposite thereto, is arranged in a supporting manner on the outside on the inner surfaces of the frame (30) and the straight plane of the other wedge (23b or 23a, 24b or 24a, 25b or 25a, 26b or 26a), which is directed opposite thereto, is arranged in a supporting manner on the outer surfaces of the support ball (17a),
the support frame (13) for each of the support balls (17a) of both ball joints (17) receives a calotte shell,
each of these two connecting and adjusting elements (16) is fastened by the second frame (30) on the support structure (7) on both sides, and
one or more vertically adjustable torque supports (28) are arranged under the support frame (13) at a spaced location from the pivot axis of the ball joints (17).

2. Device for adapting the position of the electric motor to the position of the driving drum of a direct drive for a belt conveyor in accordance with claim 1,
**characterized in that** a second hole (23e through 27e) for receiving the adjusting screws (23c through 27c) with opposite direction of action on the displaceable wedges (23b through 27b) is provided on the side located opposite the hole (23d through 27d) with the displaceable wedges (23b through 27b).

3. Device for adapting the position of the electric motor to the position of the driving drum of a direct drive for a belt conveyor in accordance with claim 1,
**characterized in that** another joint pivotable about a longitudinal axis (14) extending in parallel to the direction of conveying is provided instead of a ball joint (13) for the articulated connection of the support structure (7) with the support frame (13) with a sufficient clearance for compensating deviations in the alignment of both joints from one another.

4. Device for adapting the position of the electric motor to the position of the driving drum of a direct drive for a belt conveyor in accordance with claim 1,
**characterized in that** the detachable fastening of both connecting elements (16) with the support structure (7) is adapted to the design details of the support structure (7) and a clearance sufficient for the adjustment is provided between the screw connections and the through holes in connection elements (16).

## Revendications

1. Dispositif conçu pour adapter l'emplacement du moteur électrique à la position du tambour d'entraînement d'un entraînement direct affecté à une installation de convoyage par courroie, comprenant un bâti de support (7) dévolu à la réception dudit tambour d'entraînement (1) et un châssis distinct de support (13), dévolu à la réception dudit moteur électrique (8), l'emplacement de ce châssis de support (13) pouvant être modifié par rapport au bâti de support (7) de ladite installation de convoyage par courroie, et ledit moteur électrique étant relié à l'arbre (2) d'entraînement du tambour avec rigidité à la torsion, directement ou par l'intermédiaire d'un accouplement (18) ou d'une membrane,
**caractérisé par** le fait
que le châssis de support (13), recevant le moteur électrique (8), est rattaché au bâti de support (7) de l'installation à bande au moyen de deux éléments (16) de liaison et de réglage, présentant des réalisations de même type,
chacun de ces éléments (16) de liaison et de réglage est équipé de la bille d'appui (17a) d'une articulation à rotule (17) affectée à la liaison articulée avec le châssis de support (13) ; d'un logement (22) de cales ; et de moyens de fixation conçus pour instaurer, avec le bâti de support (7), la liaison dissociée au cours du mouvement de réglage,
ladite bille d'appui (17a) de l'articulation à rotule (17) est pourvue d'une embase carrée à surface de base plane,
ledit logement (22) de cales est constitué d'une plaque rectangulaire de base (21), cette plaque de base (21) recevant un premier cadre (29) dans la région de la périphérie intérieure duquel se trouve un groupe (27) de cales, composé d'une cale (27a) non coulissante et d'une cale (27b) apte à coulisser au moyen d'une vis de réglage (27c) ; les plans inclinés des deux cales (27a, 27b) sont agencés pour glisser l'un sur l'autre ; le plan rectiligne de l'une des cales (27a ou 27b), orienté en sens inverse, est agencé pour prendre appui contre ladite plaque de base (21) ; et le plan rectiligne de l'autre cale (27b ou 27a), orienté en sens inverse, est agencé pour prendre appui contre la surface de base de l'embase de la bille d'appui (17a),
un second cadre (30), situé sur le premier cadre (29), est relié extérieurement de part et d'autre à la structure de support et reçoit, intérieurement, quatre groupes (23, 24, 25, 26) de cales qui sont mutuellement agencés en un carré et sont constitués, à chaque fois, d'une cale (23a, 24a, 25a, 26a) non coulissante et d'une cale (23b, 24b, 25b, 26b) pouvant coulisser sur cette dernière au moyen d'une vis de réglage (23c, 24c, 25c, 26c), sachant que les plans inclinés de chacun desdits groupes (23, 24, 25, 26) de cales sont agencés pour glisser les uns sur les autres ; que le plan rectiligne de l'une des cales (23a ou 23b, 24a ou 24b, 25a ou 25b, 26a ou 26b), orienté en sens inverse, est agencé pour prendre appui extérieurement contre les surfaces intérieures dudit cadre (30) ; et que le plan rectiligne de l'autre cale (23b ou 23a, 24b ou 24a, 25b ou 25a, 26b ou 26a), orienté en sens inverse, est agencé pour prendre appui contre les surfaces extérieures de l'embase de la bille d'appui (17a),
le châssis de support (13) renferme une calotte sphérique (17b) dédiée à chacune des billes d'appui (17a) des deux articulations à rotules (17),
chacun desdits deux éléments (16) de liaison et de réglage est fixé au bâti de support (7), de part et d'autre, par l'intermédiaire du second cadre (30), et
un ou plusieurs bras (28) de support de couples, réglable(s) en hauteur, se trouve(nt) au-dessous dudit châssis de support (13), à distance de l'axe de pivotement desdites articulations à rotules (17).

2. Dispositif selon la revendication 1, conçu pour adapter l'emplacement du moteur électrique à la position du tambour d'entraînement d'un entraînement direct affecté à une installation de convoyage par courroie, **caractérisé par le fait qu'**un second alésage (23e à 27e) est respectivement prévu, du côté opposé à l'alésage (23d à 27d) associé aux cales (23b à 27b) coulissantes, pour recevoir les vis de réglage (23c à 27c) agissant en sens inverse sur lesdites cales (23b à 27b) coulissantes.

3. Dispositif selon la revendication 1, conçu pour adapter l'emplacement du moteur électrique à la position du tambour d'entraînement d'un entraînement direct affecté à une installation de convoyage par courroie, **caractérisé par le fait qu'**une autre articulation apte à pivoter autour d'au moins un axe longitudinal (14) s'étendant parallèlement à la direction du transport, et prévue à la place d'une articulation à rotule (17) pour instaurer la liaison articulée du bâti de support (7) avec le châssis de support (13), présente un jeu suffisant pour compenser des écarts d'alignement des deux articulations l'une par rapport à l'autre.

4. Dispositif selon la revendication 1, conçu pour adapter l'emplacement du moteur électrique à la position du tambour d'entraînement d'un entraînement direct affecté à une installation de convoyage par courroie, **caractérisé par le fait que** la fixation dissociable des deux éléments de liaison (16), au bâti de support (7), est adaptée aux particularités structurelles dudit bâti de support (7), et un jeu suffisant pour le réglage est prévu entre les solidarisations vissées et les alésages de passage pratiqués dans des éléments de liaison (16).
